(19) Europäisches Patentamt
European Patent Office
Office européen des brevets

(11) **EP 3 681 222 A1**

(12) **EUROPEAN PATENT APPLICATION**
published in accordance with Art. 153(4) EPC

(43) Date of publication:
**15.07.2020 Bulletin 2020/29**

(51) Int Cl.:
*H04W 72/04* (2009.01)      *H04W 8/22* (2009.01)
*H04W 16/32* (2009.01)

(21) Application number: **18853289.9**

(86) International application number:
**PCT/JP2018/033023**

(22) Date of filing: **06.09.2018**

(87) International publication number:
**WO 2019/049928 (14.03.2019 Gazette 2019/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.09.2017 JP 2017170972**

(71) Applicant: **Sharp Kabushiki Kaisha**
**Sakai City, Osaka 590-8522 (JP)**

(72) Inventors:
• **SUZUKI Shoichi**
**Osaka 590-8522 (JP)**

• **YOSHIMURA Tomoki**
**Osaka 590-8522 (JP)**
• **LEE Taewoo**
**Osaka 590-8522 (JP)**
• **OUCHI Wataru**
**Osaka 590-8522 (JP)**
• **LIU Liqing**
**Osaka 590-8522 (JP)**
• **NAKASHIMA Daiichiro**
**Osaka 590-8522 (JP)**

(74) Representative: **Müller-Boré & Partner**
**Patentanwälte PartG mbB**
**Friedenheimer Brücke 21**
**80639 München (DE)**

(54) **TERMINAL DEVICE, BASE STATION DEVICE, COMMUNICATION METHOD, AND INTEGRATED CIRCUIT**

(57)     A terminal apparatus monitors a set of first PDCCH candidates in one subframe in EUTRA and a set of second PDCCH candidates in one slot in NR, and transmits UE capability information. The UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

FIG. 7

**Description**

Technical Field

The present invention relates to a terminal apparatus, a base station apparatus, a communication method, and an integrated circuit.

This application claims priority based on JP 2017-170972 filed on September 6, 2017, the contents of which are incorporated herein by reference.

Background Art

The 3rd Generation Partnership Project (3GPP) has been working to standardize a radio access method for fourth-generation cellular mobile communications (hereinafter, referred to as "Long Term Evolution (LTE, trade name)", or "Evolved Universal Terrestrial Radio Access (EUTRA)") (NPLs 1, 2, and 3).

The 3GPP has been working to standardize a radio access method for fifth-generation cellular mobile communications (hereinafter referred to as "NR: New Radio") (NPLs 4, 5, 6, and 7).

In LTE and NR, a terminal apparatus is referred to as User Equipment (UE). In LTE, a base station apparatus is also referred to as an eNB. That is, the eNB provides EUTRA access. In NR, the base station apparatus is referred to as a gNB. That is, the gNB provides NR access.

NPL 8 describes Multi Radio access technology Dual Connectivity (MR-DC). In MR-DC, a terminal apparatus with multiple receivers and multiple transmitters utilizes radio resources provided by two separate schedulers at two different nodes (eNB and gNB). One of the schedulers is located at the eNB and the other scheduler is located at the gNB. In MR-DC, the eNB and gNB are connected via a backhaul. In MC-DC, at least one of the gNB and eNB is connected to a core network.

Citation List

Non Patent Literature

NPL 1: "3GPP TS 36.211 V14.3.0 (2017-06)", 23rd June, 2017.
NPL 2: "3GPP TS 36.212 V14.3.0 (2017-06)", 23rd June, 2017.
NPL 3: "3GPP TS 36.213 V14.3.0 (2017-06)", 23rd June, 2017.
NPL 4: "3GPP TS 38.212 V0.1.1 (2017-07)", R1-1712011, 14th July, 2017.
NPL 5: "3GPP TS 38.212 V0.0.1 (2017-07)", R1-1712014, 14th July, 2017.
NPL 6: "3GPP TS 38.213 V0.0.1 (2017-07)", R1-1712015, 15th July, 2017.
NPL 7: "3GPP TS 38.214 V0.0.1 (2017-07)", R1-1712016, 14th July, 2017.
NPL 8: "3GPP TS 37.340 V0.2.0 (2017-06)", 5th June, 2017.

Summary of Invention

Technical Problem

An aspect of the present invention provides a radio communication system in which information is efficiently transmitted, a base station apparatus for the radio communication system, a base station apparatus for the radio communication system, a communication method used for the terminal apparatus, a communication method used for the base station apparatus, an integrated circuit implemented on the terminal apparatus, and an integrated circuit implemented on the base station apparatus.

Solution to Problem

(1) According to some aspects of the present invention, the following measures are provided. Specifically, a first aspect of the present invention is a terminal apparatus including a receiver configured to monitor a set of first PDCCH candidates in one subframe in EUTRA and a set of second PDCCH candidates in one slot in NR, and a transmitter configured to transmit UE capability information, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

(2) A second aspect of the present invention is a base station apparatus connected to another base station apparatus transmitting a second PDCCH in a set of second PDCCH candidates in one slot in NR, the base station apparatus including a transmitter configured to transmit, to a terminal apparatus, a first PDCCH in a set of first PDCCH candidates in one subframe in EUTRA, and a receiver configured to receive UE capability information from the terminal apparatus, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

(3) A third aspect of the present invention is a base station apparatus including a transmitter configured to transmit, to a terminal apparatus, a first PDCCH in a set of first PDCCH candidates in one subframe in EUTRA and to transmit, to the terminal apparatus, a second PDCCH in a set of second PDCCH candidates in one slot in NR, and a receiver configured to receive UE capability information from the terminal apparatus, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

(4) A fourth aspect of the present invention is a communication method for a terminal apparatus, the communication method including monitoring a set of first PDCCH candidates in one subframe in EUTRA and a set of second PDCCH candidates in one slot in NR, and transmitting UE capability information, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

(5) A fifth aspect of the present invention is a communication method for a base station apparatus connected to another base station apparatus transmitting a second PDCCH in a set of second PDCCH candidates in one slot in NR, the communication method including transmitting, to a terminal apparatus, a first PDCCH in a set of first PDCCH candidates in one subframe in EUTRA, and receiving UE capability information from the terminal apparatus, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

(6) A sixth aspect of the present invention is a communication method for a base station apparatus, the communication method including transmitting, to a terminal apparatus, a first PDCCH in a set of first PDCCH candidates in one subframe in EUTRA and transmitting, to the terminal apparatus, a second PDCCH in a set of second PDCCH candidates in one slot in NR, and receiving UE capability information from the terminal apparatus, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

Advantageous Effects of Invention

According to one aspect of the invention, information is efficiently transmitted between a network and a terminal apparatus.

Brief Description of Drawings

FIG. 1 is a conceptual diagram of a radio communication system according to the present embodiment.
FIG. 2 is a diagram illustrating an example of a structure of a radio frame according to the present embodiment.
FIG. 3 is a diagram illustrating a general configuration of a slot according to the present embodiment.
FIG. 4 is a schematic block diagram illustrating a configuration of a terminal apparatus 1 according to the present embodiment.
FIG. 5 is a schematic block diagram illustrating a configuration of a base station apparatus 3 according to the present embodiment.
FIG. 6 is a diagram illustrating an example of a procedure for adding a secondary node according to the present embodiment.
FIG. 7 is a diagram illustrating an example of a set of PDCCH candidates according to the present embodiment.

Description of Embodiments

Embodiments of the present invention will be described below.

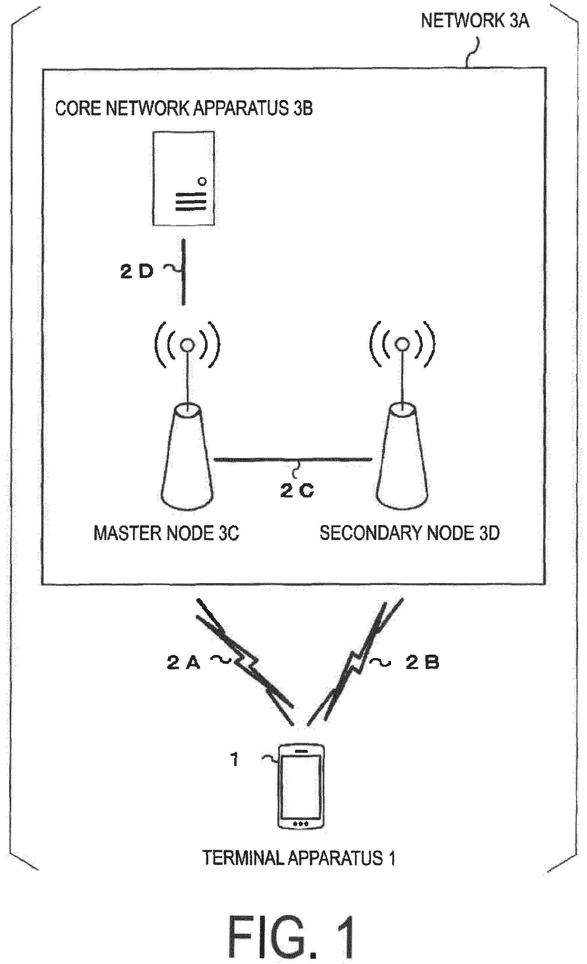

FIG. 1 is a conceptual diagram of a radio communication system according to the present embodiment. In FIG. 1, a radio communication system includes a terminal apparatus 1 and a network 3A. The network 3A may include a core network apparatus 3B, a master node 3C, and a secondary node 3D. The master node is one of eNB and gNB, and the secondary node 3D is the other of gNB and eNB. For example, the master node is eNB and the secondary node 3D is gNB. For example, the master node 3C is gNB and the secondary node 3D is eNB. eNB provides LTE (EUTRA) access. gNB provides NR access. Each of the master node 3C, the secondary node 3D, eNB, and gNB is also referred to as a base station apparatus 3. Each of the terminal apparatus 1 and the base station apparatus 3 is also referred to as a radio communication apparatus. In the present embodiment, EUTRA is also referred to as a first radio access technology. In the present embodiment, NR is also referred to as a second radio access technology.

In Multi Radio access technology (MR)-Dual Connectivity (DC), the terminal apparatus 1 simultaneously utilizes radio resources 2A and 2B provided by two separate schedulers in two different base station apparatuses (eNB and gNB). MR-DC is also referred to as Multi Connectivity (MC). One of the schedulers is located at the eNB and the other scheduler is located at the gNB. One of the eNB and gNB is a master node 3C, and the other of the eNB and gNB is a secondary node 3D. The master node 3C is connected to the core network apparatus 3B via an interface 2D. The interface 2D includes control plane connection. The master node 3C and the secondary node 3D are connected via a backhaul 2C. The eNB operating as the master node 3C is also referred to as a master eNB. The gNB operating as the master node 3C is also referred to as a master gNB. The eNB operating as the secondary node 3D is also referred to as a secondary eNB. The gNB operating as the secondary node 3D is also referred to as a secondary gNB.

MR-DC includes EUTRA NR Dual Connectivity (EN-DC) and NR EUTRA Dual Connectivity (NE-DC). In EN-DC, the terminal apparatus 1 is simultaneously connected to the master eNB and to the secondary gNB, and the master eNB is connected to the core network apparatus 3B via the interface 2D. In NE-DC, the terminal apparatus 1 is simultaneously connected to the master gNB and to the secondary eNB, and the master gNB is connected to the core network apparatus 3B via the interface 2D.

The state of the terminal apparatus 1 may be changed from RRC_IDLE to RRC_CONNECTED by a connection establishment procedure. The state of the terminal apparatus 1 may be changed from RRC_CONNECTED to RRC_IDLE by a connection release procedure.

One or more serving cells may be configured for the terminal apparatus 1 in the RRC_CONNECTED state. A technology in which the terminal apparatus 1 communicates via multiple serving cells is referred to as cell aggregation or carrier aggregation. In carrier aggregation, multiple serving cells configured are also referred to as aggregated serving cells.

Each of the one or more serving cells belongs to either the master node 3C or the secondary node 3D. A group of serving cells belonging to the master node 3C is referred to as a Master Cell Group (MCG). A group of serving cells belonging to the secondary node 3D is referred to as a Secondary Cell Group (SCG).

One or more serving cells belonging to the MCG may include one primary cell and zero or more than zero secondary cells. The primary cell is a cell in which an initial connection establishment procedure has been performed, a cell in which a connection re-establishment procedure has been initiated, or a cell indicated as a primary cell in a handover procedure. The secondary cell may be configured at a point of time when or after a Radio Resource Control (RRC) connection is established.

One or more serving cells belonging to the SCG may include one primary cell and zero or more than zero secondary cells. One or more serving cells belonging to the SCG are added in a procedure for adding a secondary node 3D.

A carrier corresponding to a serving cell in the downlink is referred to as a downlink component carrier. A carrier corresponding to a serving cell in the uplink is referred to as an uplink component carrier. The downlink component carrier and the uplink component carrier are collectively referred to as a component carrier.

The terminal apparatus 1 can simultaneously transmit multiple physical channels/multiple physical signals on multiple serving cells (component carriers). The terminal apparatus 1 can simultaneously receive multiple physical channels/multiple physical signals on multiple serving cells (component carriers).

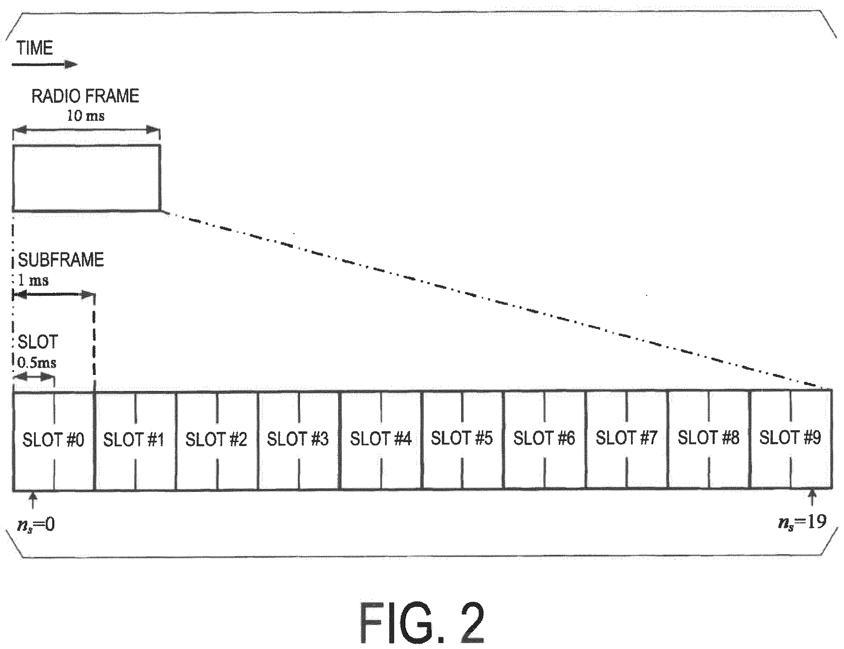

FIG. 2 is a diagram illustrating an example of a structure of a radio frame according to the present embodiment. In FIG. 2, the horizontal axis is a time axis.

Each of the radio frames may include ten contiguous subframes in the time domain. Each of subframes i may include two contiguous slots in the time domain. The two contiguous slots in the time domain may be a slot having a slot number $n_s$ of $2i$ in the radio frame and a slot having a slot number $n_s$ of $2i + 1$ in the radio frame. Each of the radio frames may include ten contiguous subframes in the time domain. Each of the radio frames may include 20 contiguous slots ($n_s = 0, 1, ..., 19$) in the time domain. The configuration of the radio frame described above may be applied to both the uplink and the downlink.

One subframe may include one slot.

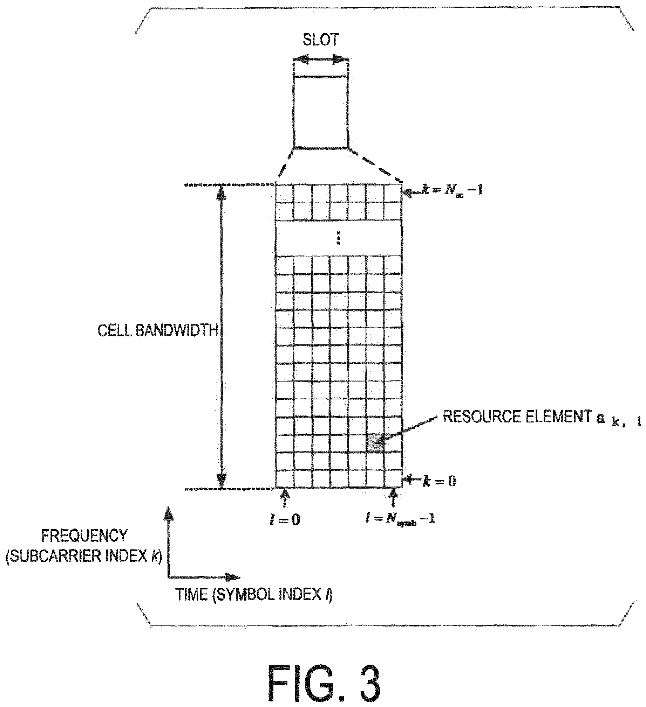

A configuration of a slot according to the present embodiment will be described below. FIG. 3 is a diagram illustrating a general configuration of a slot according to the present embodiment. FIG. 3 illustrates a configuration of the slot in one serving cell. In FIG. 3, the horizontal axis is a time axis, and the vertical axis is a frequency axis. In FIG. 3, 1 is a symbol number/index, and k is a subcarrier number/index. Here, the symbol may be an Orthogonal Frequency Division Multiplexing (OFDM) symbol or a Single Carrier Frequency Division Multiple Access (SC-FDMA) symbol. $N_{SC}$ is a total number of subcarriers included in a cell bandwidth. $N_{symb}$ is a total number of symbols included in one slot. $N_{symb}$ may be given based on a subcarrier spacing.

The physical signal or the physical channel transmitted in each of the slots is expressed by a resource grid. The resource grid is defined by multiple subcarriers and multiple symbols. Each element within the resource grid is referred to as a resource element. The resource element $a_{k,l}$ is expressed by a subcarrier number/index k and a symbol number/index 1. Specifically, a resource for transmitting a physical signal or a physical channel may be expressed by resource elements.

The resource grid may be defined for each antenna port. In the present embodiment, description is given for one antenna port. The present embodiment may be applied to each of multiple antenna ports.

The radio frames, subframes, and slots are time units.

The structure of EUTRA radio frames may be different from the configuration of NR radio frames. The length of each EUTRA radio frame may be the same as or different from the length of each NR radio frame. The length of each EUTRA slot may be the same as or different from the length of each NR slot. The length of each EUTRA OFDM symbol may be the same as or different from the length of each NR OFDM symbol.

Physical channels and physical signals according to the present embodiment will be described.

In FIG. 1, the downlink physical channels below are used for radio communication in the downlink 2A from the eNB to the terminal apparatus 1. In FIG. 1, the downlink physical channels below are used for radio communication in the downlink 2B from the gNB to the terminal apparatus 1. The downlink physical channels are used by the physical layer for transmission of information output from the higher layer.

- Physical Downlink Control Channel (PDCCH)
- Physical Downlink Shared Channel (PDSCH)

The PDCCH transmitted by the eNB is referred to as an LTE-PDCCH or a first PDCCH. The PDCCH transmitted by the gNB is referred to as an NR-PDCCH or a second PDCCH. The PDSCH transmitted by the eNB is referred to as an LTE-PDSCH or a first PDSCH. The PDSCH transmitted by the gNB is referred to as an NR-PDSCH or a second PDSCH. The LTE-PDCCH may include an Enhanced Physical Downlink Control Channel (EPDCCH) and a short Physical Downlink Control Channel (sPDSCH).

The first PDCCH is used to transmit Downlink Control Information (DCI) used to schedule the first PDSCH, and downlink control information used to schedule the first PUSCH (NR Physical Uplink Shared Channel). The second PDCCH is used to transmit downlink control information used to schedule the second PDSCH, and downlink control information used to schedule the second PUSCH.

The eNB may code the downlink control information according to a first coding scheme. Specifically, the eNB may code the downlink control information transmitted on the first PDCCH by using the first coding scheme. The gNB may code the downlink control information by using a second coding scheme different from the first coding scheme. Specifically, the gNB may code the downlink control information transmitted on the second PDCCH by using the second coding scheme. The first coding scheme may be convolutional coding. The second coding scheme may be polar coding.

The PDSCH is used to transmit downlink data (Downlink Shared Channel (DL-SCH)). The terminal apparatus 1 may decode PDSCH, based on reception/detection of the PDCCH including the downlink control information.

In FIG. 1, the uplink physical channels below are used for radio communication in the uplink 2A from the eNB to the terminal apparatus 1. In FIG. 1, the uplink physical channels below are used for radio communication in the uplink 2B from the gNB to the terminal apparatus 1. The uplink physical channels are used by a physical layer for transmission of information output from a higher layer.

- Physical Random Access Channel (PRACH)
- Physical Uplink Control Channel (PUCCH)
- Physical Uplink Shared Channel (PUSCH)

The PRACH that the terminal apparatus 1 transmits to the eNB is referred to as an LTE-PRACH or a first PRACH. The PRACH that the terminal apparatus 1 transmits to the gNB is referred to as an NR-PRACH or a second PRACH. The PUCCH that the terminal apparatus 1 transmits to the eNB is referred to as an LTE-PUCCH or a first PUCCH. The PUCCH that the terminal apparatus 1 transmits to the gNB is referred to as an NR-PUCCH or a second PUCCH. The PUSCH that the terminal apparatus 1 transmits to the eNB is referred to as an LTE-PUSCH or a first PUSCH. The PUSCH that the terminal apparatus 1 transmits to the gNB is referred to as an NR-PUSCH or a second PUSCH.

The PRACH is used to transmit a preamble (preamble sequence). The PRACH may be used for a random access procedure.

The PUCCH may be used to transmit the uplink control information. The uplink control information may include a Hybrid Automatic Repeat reQuest ACKnowledgement (HARQ-ACK), channel state information, and a scheduling request. The HARQ-ACK corresponds to the PDSCH (downlink data) and indicates an Acknowledgement (ACK) or a Negative-Acknowledgement (NACK). The channel state information is generated, based on a received signal and/or channel. The scheduling request transmitted on the LTE-PUCCH indicates that allocation of resources of the LTE-PUSCH (uplink data) is requested. The scheduling request transmitted on the NR-PUCCH indicates that allocation of resources of the NR-PUSCH (uplink data) is requested.

The PUSCH may be used for transmission of uplink data (Uplink Shared Channel: UL-SCH, transport block) and/or uplink control information.

An apparatus configuration of the terminal apparatus 1 according to the present embodiment will be described below.

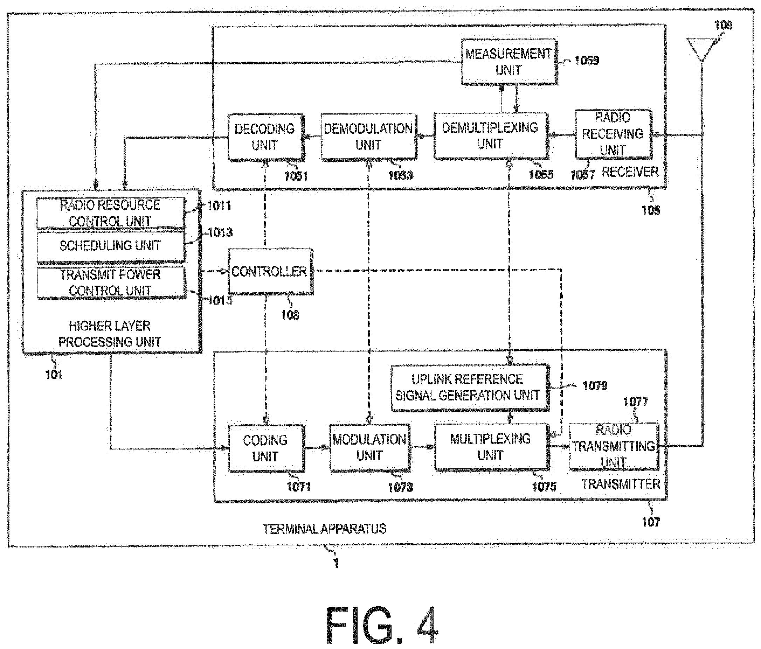

FIG. 4 is a schematic block diagram illustrating a configuration of the terminal apparatus 1 according to the present embodiment. As illustrated in FIG. 4, the terminal apparatus 1 includes a higher layer processing unit 101, a controller 103, a receiver 105, a transmitter 107, and a transmit and/or receive antenna 109. The higher layer processing unit 101 includes a radio resource control unit 1011, a scheduling information interpretation unit 1013, and a transmit power control unit 1015. The receiver 105 includes a decoding unit 1051, a demodulation unit 1053, a demultiplexing unit 1055, a radio receiving unit 1057, and a measurement unit 1059. The transmitter 107 includes a coding unit 1071, a modulation unit 1073, a multiplexing unit 1075, a radio transmitting unit 1077, and an uplink reference signal generation unit 1079.

The higher layer processing unit 101 outputs the uplink data (the transport block) generated by a user operation or the like, to the transmitter 107. The higher layer processing unit 101 performs processing of a Medium Access Control (MAC) layer, a Packet Data Convergence Protocol (PDCP) layer, a Radio Link Control (RLC) layer, and a Radio Resource Control (RRC) layer.

The radio resource control unit 1011 included in the higher layer processing unit 101 manages various configuration information of the terminal apparatus 1. The radio resource control unit 1011 generates information to be mapped to each uplink channel, and outputs the generated information to the transmitter 107.

The scheduling unit 1013 included in the higher layer processing unit 101 generates control information for control of the receiver 105 and the transmitter 107, based on the downlink control information received via the receiver 105, and outputs the generated control information to the controller 103.

The transmit power control unit 1015 sets transmit power for transmission of the uplink physical channel. The transmit power control unit 1015 generates control information indicating, to the transmitter 107, transmission of the uplink physical channel using the set transmit power, and outputs the generated control information to the controller 103.

In accordance with the control information originating from the higher layer processing unit 101, the controller 103 generates a control signal for control of the receiver 105 and the transmitter 107. The controller 103 outputs the generated control signal to the receiver 105 and the transmitter 107 to control the receiver 105 and the transmitter 107.

In accordance with the control signal input from the controller 103, the receiver 105 demultiplexes, demodulates, and decodes a reception signal received from the base station apparatus 3 through the transmit and/or receive antenna 109, and outputs the decoded information to the higher layer processing unit 101.

The radio receiving unit 1057 converts (down-converts) a downlink signal received through the transmit and/or receive antenna 109 into a signal of an intermediate frequency, removes unnecessary frequency components, controls an amplification level in such a manner as to suitably maintain a signal level, performs orthogonal demodulation based on an in-phase component and an orthogonal component of the received signal, and converts the resulting orthogonally-demodulated analog signal into a digital signal. The radio receiving unit 1057 removes a portion corresponding to a Guard Interval (GI) from the digital signal resulting from the conversion, performs Fast Fourier Transform (FFT) on the signal from which the Guard Interval has been removed, and extracts a signal in the frequency domain.

The demultiplexing unit 1055 demultiplexes the extracted signal into the downlink physical channel and the downlink physical signal. The demultiplexing unit 1055 performs channel compensation for the downlink physical channel based on the channel estimate value input from the measurement unit 1059. The demultiplexing unit 1055 outputs the downlink reference signal resulting from the demultiplexing, to the measurement unit 1059.

The demodulation unit 1053 and the decoding unit 1051 decode the downlink control information, and outputs, to the higher layer processing unit 101, the downlink data (transport block) resulting from the decoding. The demodulation unit 1053 and the decoding unit 1051 decode the downlink data (transport block), based on information related to a coding rate notified in the downlink control information and a modulation scheme notified in the downlink control information, and outputs the decoded downlink data (transport block) to the higher layer processing unit 101.

The measurement unit 1059 performs downlink path loss measurement, channel measurement, and/or interference measurement, based on the downlink physical signal input from the demultiplexing unit 1055. The measurement unit 1059 outputs, to the higher layer processing unit 101, the measurement result and the channel state information calculated based on the measurement result. The measurement unit 1059 calculates a downlink channel estimate from the downlink physical signal and outputs the calculated downlink channel estimate to the demultiplexing unit 1055.

The transmitter 107 generates the uplink reference signal in accordance with the control signal input from the controller 103, codes and modulates the uplink data (the transport block) input from the higher layer processing unit 101, multiplexes the PUCCH, the PUSCH, and the generated uplink reference signal, and transmits a signal resulting from the multiplexing to the base station apparatus 3 through the transmit and/or receive antenna 109.

The coding unit 1071 codes the Uplink Control Information and the uplink data input from the higher layer processing unit 101. The modulation unit 1073 modulates the coded bits input from the coding unit 1071, in compliance with the modulation scheme such as BPSK, QPSK, 16 QAM, or 64 QAM.

The uplink reference signal generation unit 1079 generates a sequence determined according to a prescribed rule (formula), based on a physical cell identity (also referred to as a Physical Cell Identity (PCI), a cell ID, or the like) for identifying the base station apparatus 3, a bandwidth in which the uplink reference signal is mapped, a cyclic shift notified with the uplink grant, a parameter value for generation of a DMRS sequence, and the like.

Based on the information used for the scheduling of PUSCH, the multiplexing unit 1075 determines the number of PUSCH layers to be spatial-multiplexed, maps multiple pieces of uplink data to be transmitted on the same PUSCH to multiple layers through Multiple Input Multiple Output Spatial Multiplexing (MIMO SM), and performs precoding on the layers.

In accordance with the control signal input from the controller 103, the multiplexing unit 1075 performs Discrete Fourier Transform (DFT) on modulation symbols of PUSCH. The multiplexing unit 1075 multiplexes PUCCH and PUSCH signals and the generated uplink reference signal for each transmit antenna port. To be more specific, the multiplexing unit 1075 maps the PUCCH and PUSCH signals and the generated uplink reference signal to the resource elements for each transmit antenna port.

The radio transmitting unit 1077 performs Inverse Fast Fourier Transform (IFFT) on a signal resulting from the multiplexing, performs modulation in compliance with an SC-FDMA scheme, adds the Guard Interval to the SC-FDMA-modulated SC-FDMA symbol, generates a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 109 for transmission.

An apparatus configurations of the base station apparatus 3 according to the present embodiment will be described below.

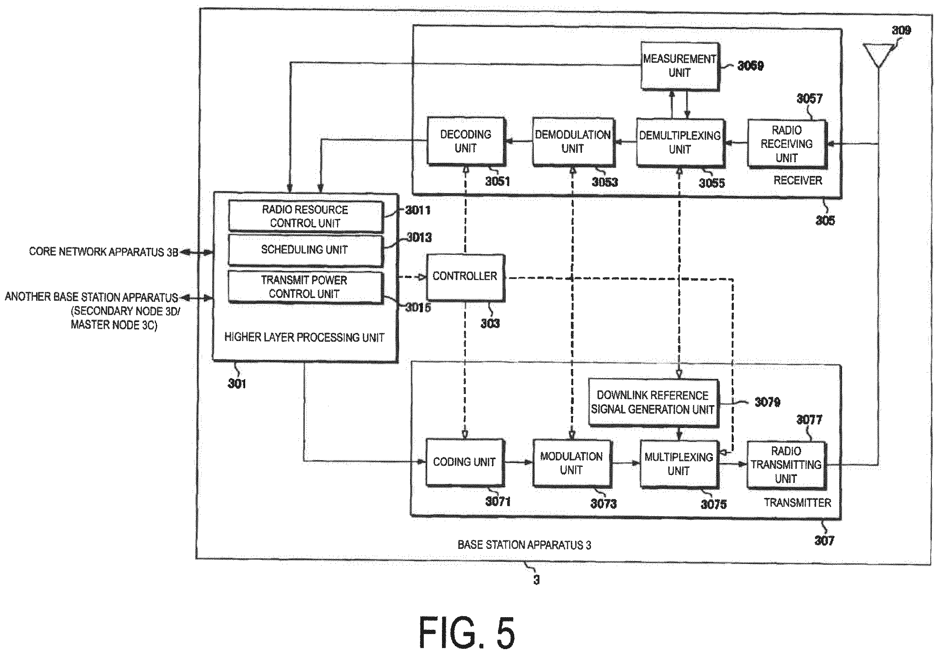

FIG. 5 is a schematic block diagram illustrating a configuration of the base station apparatus 3 according to the present embodiment. As is illustrated, the base station apparatus 3 includes a higher layer processing unit 301, a controller 303, a receiver 305, a transmitter 307, and a transmit and/or receive antenna 309. The higher layer processing unit 301 includes a radio resource control unit 3011, a scheduling unit 3013, and a transmit power control unit 3015. The receiver 305 includes a decoding unit 3051, a demodulation unit 3053, a demultiplexing unit 3055, a radio receiving unit 3057, and a measurement unit 3059. The transmitter 307 includes a coding unit 3071, a modulation unit 3073, a multiplexing unit 3075, a radio transmitting unit 3077, and a downlink reference signal generation unit 3079.

The higher layer processing unit 301 performs processing of a Medium Access Control (MAC) layer, a Packet Data Convergence Protocol (PDCP) layer, a Radio Link Control (RLC) layer, and a Radio Resource Control (RRC) layer. The higher layer processing unit 301 generates control information for control of the receiver 305 and the transmitter 307, and outputs the generated control information to the controller 303.

The higher layer processing unit 301 transmits and/or receives messages to and/or from the core network apparatus 3B. The higher layer processing unit 301 transmits and/or receives messages to and/or from the other base station apparatuses 3. The other base station apparatuses 3 may include the master node 3C and the secondary node 3D.

The radio resource control unit 3011 included in the higher layer processing unit 301 generates, or obtains from a higher node, the downlink data (transport block) mapped to the downlink PDSCH, system information, an RRC message, a MAC Control Element (CE), and the like, and outputs a result of the generation or the obtainment to the transmitter 307. The radio resource control unit 3011 manages various configuration information for each of the terminal apparatuses 1.

The scheduling unit 3013 included in the higher layer processing unit 301 determines frequencies and subframes to which the physical channels (NR-PDSCH and NR-PUSCH) are allocated, the coding rate, modulation scheme, and transmit power for the physical channels (NR-PDSCH and NR-PUSCH), and the like, from the received channel state information and from the channel estimate, channel quality, or the like input from the measurement unit 3059. The scheduling unit 3013 generates the control information in order to control the receiver 305 and the transmitter 307 in accordance with a result of the scheduling, and outputs the generated information to the controller 303. The scheduling unit 3013 generates information (e.g., downlink control information) to be used for the scheduling of the physical channels (NR-PDSCH and NR-PUSCH), based on the scheduling result.

The transmit power control unit 3015 included in the higher layer processing unit 301 generates transmit power control information (higher layer parameter and/or TPC command) used to set the transmit power for transmission of the uplink physical channel. The transmit power control unit 1015 generates control information indicating, to the transmitter 107, transmission of the information, and outputs the generated control information and the transmit power control information to the controller 103.

Based on the control information originating from the higher layer processing unit 301, the controller 303 generates a control signal for controlling the receiver 305 and the transmitter 307. The controller 303 outputs the generated control signal to the receiver 305 and the transmitter 307 to control the receiver 305 and the transmitter 307.

In accordance with the control signal input from the controller 303, the receiver 305 demultiplexes, demodulates, and decodes the reception signal received from the terminal apparatus 1 through the transmit and/or receive antenna 309, and outputs information resulting from the decoding to the higher layer processing unit 301. The radio receiving unit 3057 converts (down-converts) an uplink signal received through the transmit and/or receive antenna 309 into a signal of an intermediate frequency, removes unnecessary frequency components, controls the amplification level in such a manner as to suitably maintain a signal level, performs orthogonal demodulation based on an in-phase component and an orthogonal component of the received signal, and converts the resulting orthogonally-demodulated analog signal into a digital signal.

The radio receiving unit 3057 removes a portion corresponding to the Guard Interval (GI) from the digital signal resulting from the conversion. The radio receiving unit 3057 performs Fast Fourier Transform (FFT) on the signal from which the Guard Interval has been removed, extracts a signal in the frequency domain, and outputs the resulting signal to the demultiplexing unit 3055.

The demultiplexing unit 1055 demultiplexes the signal input from the radio receiving unit 3057 into signals such as the NR-PUCCH, NR-PUSCH, and the uplink reference signal. Note that the demultiplexing is performed based on radio resource allocation information that is determined in advance by the base station apparatus 3 by using the radio resource control unit 3011 and that is included in the uplink grant notified to each of the terminal apparatuses 1. The demultiplexing unit 3055 compensates for channels including the NR-PUCCH and NR-PUSCH, based on the channel estimate input from the measurement unit 3059. The demultiplexing unit 3055 outputs an uplink reference signal resulting from the demultiplexing, to the measurement unit 3059.

The demodulation unit 3053 performs Inverse Discrete Fourier Transform (IDFT) on the NR-PUSCH, obtains modulation symbols, and performs reception signal demodulation on each of the modulation symbols on the NR-PUCCH and the NR-PUSCH, by using the modulation scheme determined in advance, such as Binary Phase Shift Keying (BPSK), QPSK, 16 QAM, or 64 QAM, or the modulation scheme notified in advance with the uplink grant to each of the terminal apparatuses 1 by the base station apparatus 3. The demodulation unit 3053 demultiplexes the modulation symbols of multiple uplink data transmitted on the same NR-PUSCH by using the MIMO SM, based on the number of spatial-multiplexed sequences notified in advance with the uplink grant to each of the terminal apparatuses 1 and information indicating precoding to be performed on the sequences.

The decoding unit 3051 obtains the uplink data and the uplink control information from the NR-PUCCH and NR-PUSCH, and outputs the uplink data and the uplink control information to the higher layer processing unit 101. The measurement unit 309 measures the channel estimate value, the channel quality, and the like, based on the uplink reference signal input from the demultiplexing unit 3055, and outputs a signal resulting from the measurement to the demultiplexing unit 3055 and the higher layer processing unit 301.

The transmitter 307 generates the downlink reference signal in accordance with the control signal input from the controller 303, codes and modulates the HARQ indicator, downlink control information, and downlink data input from the higher layer processing unit 301, multiplexes the NR-PDCCH, NR-PDSCH, and downlink reference signal, and transmits a result of the multiplexing to the terminal apparatus 1 through the transmit and/or receive antenna 309.

The coding unit 3071 codes the downlink control information and the downlink data input from the higher layer processing unit 301. The modulation unit 3073 modulates the coded bits input from the coding unit 3071, in compliance with the modulation scheme such as BPSK, QPSK, 16 QAM, or 64 QAM.

The downlink reference signal generation unit 3079 generates, as the downlink reference signal, a sequence known to the terminal apparatus 1, the sequence being determined in accordance with a predetermined rule based on the physical cell identity (PCI) for identifying the base station apparatus 3, or the like.

The multiplexing unit 3075, in accordance with the number of NR-PDSCH layers to be spatial-multiplexed, maps, to one or more layers, one or more downlink data to be transmitted on one NR-PDSCH, and performs precoding on the one or more layers. The multiplexing unit 375 multiplexes the downlink physical channel signal and the downlink reference signal for each transmit antenna port. The multiplexing unit 375 maps the downlink physical channel signal and the downlink reference signal in the resource element for each transmit antenna port.

The radio transmitting unit 3077 performs Inverse Fast Fourier Transform (IFFT) on the modulation symbol resulting from the multiplexing or the like to perform the modulation in compliance with an OFDM scheme, adds the Guard Interval to the OFDM-modulated OFDM symbol to generate a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 309 for transmission.

Each of the units in FIG. 4 and FIG. 5 may be configured as a circuit. For example, the transmitter 107 may be a transmission circuit 107.

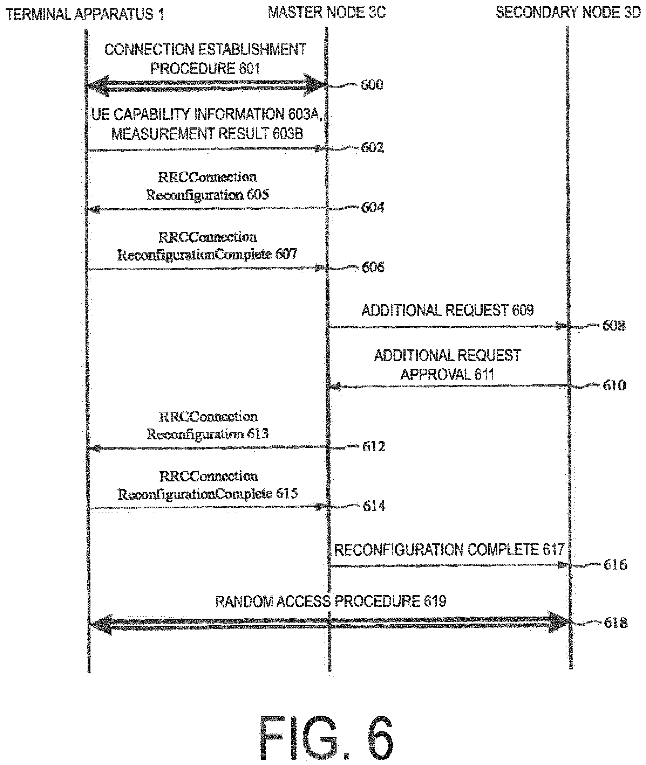

A procedure for adding a secondary node will be described below. FIG. 6 is a diagram illustrating an example of the procedure for adding a secondary node according to the present embodiment.

The procedure for adding a secondary node 3D is initiated by the master node 3C. The procedure for adding a secondary node 3D is used to establish a UE context in the secondary node 3D to provide radio resources to the terminal apparatus 1 from the secondary node 3D.

At 600, the terminal apparatus 1 performs a connection establishment procedure to establish a connection to the master node 3C.

At 602, the terminal apparatus 1 transmits UE capability information 603A and a measurement result 603B to the master node 3C. The UE capability information 603A indicates functions supported by the terminal apparatus 1. The measurement result 603B indicates the result of measurement using the signal received by the terminal apparatus 1.

At 604, the master node 3C transmits an RRCConnectionReconfiguration message 605 for the MCG to the terminal apparatus 1.

At 606, the terminal apparatus 1 applies a new configuration to the MCG, based on the RRCConnectionReconfiguration message 605, and transmits an RRCConnectionReconfigurationComplete message 607 to the master node 3C.

At 608, the master node 3C determines to request the secondary node 3D to allocate radio resources, and further transmits an additional request message 609 to the secondary node 3D. The additional request message 609 may include at least some or all of the SCG configuration, UE capability information 603A, measurement result 603B, RRCConnectionReconfiguration message 605, and UE capability cooperation result that the master node 3C requests the secondary node 3D.

At 610, in a case that the secondary node 3D can approve the request for radio resources, the secondary node 3C allocates the radio resources and transmits an additional request approval message 611 to the master node 3C. The secondary node 3C may determine a primary secondary cell of the SCG and a secondary cell of the SCG, based on the measurement result 603B. The additional request approval message 611 includes an RRC configuration message for a radio access technology provided by the secondary node. The RRC configuration message includes the RRCConnectionReconfiguration message 613 for the SCG. The RRCConnectionReconfiguration message 613 includes at least a configuration related to the determined primary secondary cell and a configuration for the determined secondary cell.

At 612, the master node 3C transmits the RRCConnectionReconfiguration message 613 for the SCG to the terminal apparatus 1. Here, the master node 3C does not modify the RRCConnectionReconfiguration message 613 received from the secondary node.

At 614, the terminal apparatus 1 applies the new configuration to the SCG, based on the RRCConnectionReconfiguration message 613, and transmits an RRCConnectionReconfigurationComplete message 615 to the master node 3C.

At 617, the master node 3C notifies, via transmission of the reconfiguration complete message 617, that the terminal apparatus 1 has successfully completed the reconfiguration procedure based on the RRCConnectionReconfiguration message 613.

At 618, the terminal apparatus 1 initiates a random access procedure 619 in order to obtain synchronization with the primary secondary cell of the secondary node 3D.

Monitoring of the PDCCH will be described below.

The terminal apparatus 1 monitors a set of PDCCH candidates. The set of PDCCH candidates is also referred to as a search space. The search space may be a UE-specific search space. The PDCCH candidate is a set of resource elements. Specifically, the PDCCH candidate is a time-frequency resource. Here, monitoring means an attempt to decode each of the PDCCHs in a set of PDCCH candidates according to the DCI format. Specifically, monitoring means an attempt to decode the PDCCHs in the PDCCH candidates including DCI formats.

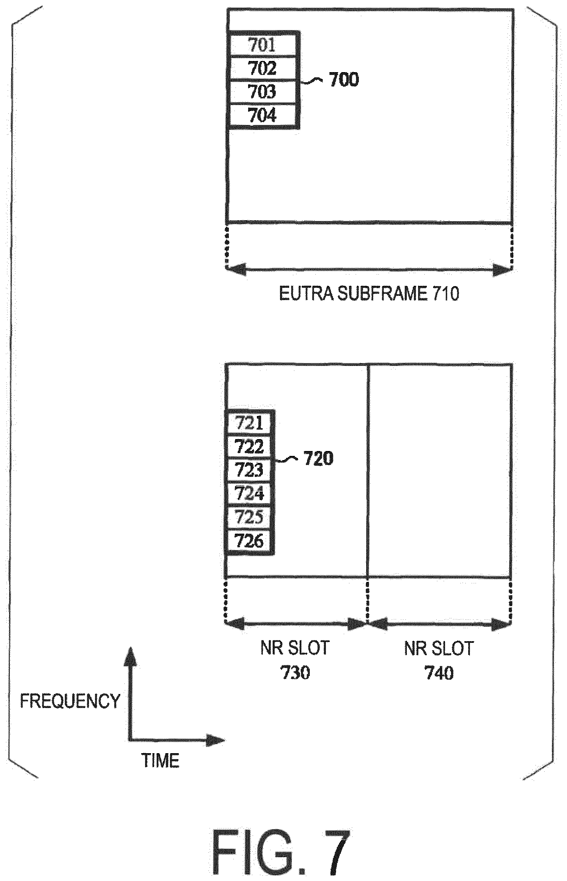

FIG. 7 is a diagram illustrating an example of a set of PDCCH candidates according to the present embodiment. An EUTRA subframe 710 includes a set of first PDCCH candidates 700. The set of first PDCCH candidates 700 includes four first PDCCH candidates 701, 702, 703, and 704. An NR slot 730 includes a set of second PDCCH candidates 720. The set of second PDCCH candidates 720 includes six second PDCCH candidates 721, 722, 723, 724, 725, and 726.

The eNB may transmit a first PDCCH including a first DCI format in the first PDCCH candidates. The gNB may transmit a second PDCCH including a second DCI format in the second PDCCH candidate.

The terminal apparatus 1 may monitor, in the subframe 710, the set of the first PDCCH candidates 700 in accordance with the one or more first DCI formats. The terminal apparatus 1 may monitor, in the slot 730, the set of the second PDCCH candidates 720 in accordance with one or more second DCI formats. The terminal apparatus 1 may simultaneously monitor the set of the first PDCCH candidates 700 and the set of the second PDCCH candidates 720.

The number of times of blind decoding may be defined by the number of PDCCH candidates to be monitored by the terminal apparatus 1 and the number of payload sizes for the DCI formats to which the PDCCH candidates correspond.

The number of times of blind decoding in the set of the first PDCCH candidates may be given, based at least on the number of the first PDCCH candidates included in the set of the first PDCCH candidates 700 and the number of payload sizes for the first DCI format to be monitored. The number of times of blind decoding in the set of the first PDCCH candidates may be given by the product of the number of the first PDCCH candidates included in the set of the first PDCCH candidates 700 and the number of payload sizes for the first DCI format to be monitored.

The number of times of blind decoding in the set of the second PDCCH candidates may be given based at least on the number of the second PDCCH candidates included in the set of the second PDCCH candidates 720 and the number of payload sizes for the second DCI format to be monitored. The number of times of the blind decoding in the set of the second PDCCH candidates may be given by the product of the number of the second PDCCH candidates included in the set of the second PDCCH candidates 720 and the number of payload sizes for the second DCI format to be monitored.

For example, in a case that the terminal apparatus 1 attempts to decode each of the first PDCCHs in the set of the first PDCCH candidates 700 in accordance with a DCI format with a first payload size and a DCI format with a second payload size, the first DCI format has two payload sizes. For example, in a case that the terminal apparatus 1 attempts to decode each of the second PDCCHs in the set of the second PDCCH candidates 720 in accordance with only the DCI format with the first payload size, the second DCI format has one payload size.

The UE capability information 603A transmitted by the terminal apparatus 1 at 602 may at least indicate some or all of (i) to (iv) below. For example, the unit time used below may be one NR slot, one LTE subframe, one millisecond, or one second, (i) The maximum number $A_{MAX}$ of times of blind decoding in the set of the first PDCCH candidates in one subframe in EUTRA, the maximum number A being supported by the terminal apparatus 1, (ii) the maximum number $B_{MAX}$ of times of blind decoding in the set of the second PDCCH candidates in one slot in NR, the maximum number B being supported by the terminal apparatus 1, (iii) the combination of the maximum number A of times of blind decoding in the set of the first PDCCH candidates in one subframe (e.g., one millisecond) in EUTRA and the maximum number B of times of blind decoding in the set of the second PDCCH candidates in one slot (e.g., 0.5 millisecond or 1 millisecond) in NR, the combination being supported by the terminal apparatus 1, and (iv) the combination of the maximum number A of times of blind decoding in the set of the first PDCCH candidates in one unit time and the maximum number B of times of blind decoding in the set of the second PDCCH candidates in the one unit time, the maximum numbers being supported by the terminal apparatus 1

One time of blind decoding in the set of the first PDCCH candidates may correspond to X times of blind decoding in the set of the second PDCCH candidates. Specifically, one time of blind decoding in the set of the second PDCCH candidates may correspond to Y times of blind decoding in the set of the first PDCCH candidates. X may be given by Y. X may be the value of ratio of one to Y (one-Yth). Specifically, X may be given by Y. Here, Y may be given by X. Y may be the value of ratio of 1 to X (one-Xth). Specifically, Y may be given by X. X may be one. X may not be one. For example, X may be a value smaller than 1 and greater than 0, or a value greater than 1. Y may be 1. Y may not be 1. For example, Y may be a value smaller than 1 and greater than 0, or a value greater than 1. One or both of X and Y may have values predefined by specifications or the like.

$A_{MAX}$ may be given based at least on $B_{MAX}$ and X. $B_{MAX}$ may be given based at least on $A_{MAX}$ and X. $A_{MAX}$ may be given by Equation (1) below. $B_{MAX}$ may be given by Equation (2) below. Floor functions in Equations (1) to (14) below may be ceiling functions or ROUND functions that output integers.

Equation 1

$$A_{MAX} = \text{floor}\left(B_{MAX} / X\right)$$

Equation 2

$$B_{MAX} = floor(A_{MAX} \cdot X)$$

An increase in the maximum number B in one unit time reduces the maximum number A in the unit time. A decrease in the maximum number B in one unit time increases the maximum number A in the unit time. $A_{MAX}$ may be the same as A in a case that B is 0. $B_{MAX}$ may be the same as B in a case that A is 0. A may be given based at least on $A_{MAX}$ and X. B may be given based at least on $B_{MAX}$ and X. A may be given by any one of Equations (3) to (5) below. B may be given by any one of Equations (6) to (8) below.

Equation 3

$$A = A_{MAX} - floor(B/X)$$

Equation 4

$$A = floor(A_{MAX} - B/X)$$

Equation 5

$$A = floor\{(B_{MAX} - B)/X\}$$

Equation 6

$$B = B_{MAX} - floor(A \cdot X)$$

Equation 7

$$B = floor(B_{MAX} - A \cdot X)$$

Equation 8

$$B = floor\{(A_{MAX} - A) \cdot X\}$$

$A_{MAX}$ may indicate the maximum number times of blind decoding in the set of the first PDCCH candidates in one unit time or in one subframe in EUTRA in a case that the terminal apparatus 1 is assumed to communicate only with the eNB (non-dual connectivity). $B_{MAX}$ may indicate the maximum number of times of blind decoding in the set of the second PDCCH candidates in one unit time or in one slot in NR in a case that the terminal apparatus 1 is assumed to communicate only with the gNB (non-dual connectivity). A may indicate the maximum number of times of blind decoding in the set of the first PDCCH candidates in one unit time in a case that the terminal apparatus 1 is assumed to communicate with the eNB and the gNB (dual connectivity). B may indicate the maximum number of times of blind decoding in the set of the second PDCCH candidates in one unit time in a case that the terminal apparatus 1 is assumed to communicate with the eNB and the gNB (dual connectivity).

For example, the terminal apparatus 1 may transmit, to the master node 3C, UE capability information 603A indicating $A_{MAX}$. Here, $A_{MAX}$ may be used by the master node 3C to derive $B_{MAX}$. Here, $A_{MAX}$ may be used by the master node 3C to derive a combination of A and B. Specifically, the UE capability information 403A indicating $A_{MAX}$ is used to indicate the combination of A and B and $B_{MAX}$ to the master node 3C.

For example, the terminal apparatus 1 may transmit, to the master node 3C, the UE capability information 403A indicating $B_{MAX}$. Here, $B_{MAX}$ may be used by the master node 3C to derive $A_{MAX}$. Here, $B_{MAX}$ may be used by the master node 3C to derive the combination of A and B. Specifically, the UE capability information 403A indicating $B_{MAX}$ is used to indicate the combination of A and B and $A_{MAX}$ to the master node 3C.

Hereinafter, a method of configuring a set of PDCCH candidates will be described.

In a case that the master node 3C is the eNB, the master node 3C may transmit, to the terminal apparatus 1, the RRCConnectionReconfiguration message 605 including a parameter LTE-pdcch-Candidate for controlling the number of first PDCCH candidates included in the set of the first PDCCH candidates 700 monitored by the terminal apparatus 1.

In the case that the master node 3C is the eNB, the master node 3C may transmit, to the terminal apparatus 1, the parameter LTE-dci-Format for controlling the first DCI format for which the terminal apparatus 1 monitors the set of the first PDCCH candidates 700. The parameter LTE-dci-Format may be included in the RRCConnectionReconfiguration message 605.

In the case that the master node 3C is the eNB, the master node 3C may set the parameters LTE-pdcch-Candidate and/or the parameters LTE-dci-Format such that the number of times of blind decoding in the set of the first PDCCH candidates in one subframe in EUTRA does not exceed $A_{MAX}$.

In a case that the master node 3C is the gNB, the master node 3C may transmit, to the terminal apparatus 1, the RRCConnectionReconfiguration message 605 including the parameter NR-pdcch-Candidate for controlling the number of second PDCCH candidates included in the set of the second PDCCH candidates 720 monitored by the terminal apparatus 1.

In the case that the master node 3C is the gNB, the master node 3C may transmit, to the terminal apparatus 1, the RRCConnectionReconfiguration message 605 including a parameter NR-dci-Format for controlling the second DCI format for which the terminal apparatus 1 monitors the set of the second PDCCH candidates 720.

In the case that the master node 3C is the eNB, the master node 3C may set the parameter NR-pdcch-Candidate and/or the parameter NR-dci-Format such that the number of times of blind decoding in the set of the first PDCCH candidates in one slot in NR does not exceed $B_{MAX}$.

In a case that the master node 3C is the eNB and the secondary node 3D is the gNB, the secondary node 3D may include both or one of the parameter NR-pdcch-Candidate and the parameter NR-dci-Format in the RRCConnectionReconfiguration message 613 included in the additional request approval. Here, the secondary node 3D may obtain the number of times of blind decoding $A_{actual}$ in the set of the first PDCCH candidates in the unit time or in one subframe in EUTRA, based on the UE capability information 603A and/or RRCConnectionReconfiguration message 605 (the parameter LTE-pdcch-Candidate, the parameter LTE-dci-Format, etc.). Here, based on $A_{actual}$ obtained and a part or all of (iii) and (iv) described above, the secondary node 3D may set the parameter LTE-pdcch-Candidate and/or the parameter LTE-dci-Format such that the number of times of blind decoding $B_{actual}$ in the set of the second PDCCH candidates in the unit time or in one slot in NR does not exceed $B_{MAX\_act}$. $B_{MAX\_act}$ may be given, based at least on $B_{MAX}$ and $A_{actual}$ and X. $B_{MAX\_act}$ may be given by any one of Equations (9) to (11) below.

Equation 9

$$B_{MAX\_act} = B_{MAX} - \mathrm{floor}\left(A_{actual} \cdot X\right)$$

Equation 10

$$B_{MAX\_act} = \mathrm{floor}\left(B_{MAX} - A_{actual} \cdot X\right)$$

Equation 11

$$B_{MAX\_act} = \text{floor}\{(A_{MAX} - A_{actual}) \cdot X\}$$

In a case that the master node 3C is the gNB and the secondary node 3D is the eNB, the secondary node 3D may include both or one of the parameter LTE-pdcch-Candidate and the parameter LTE-dci-Format in the RRCConnectionReconfiguration message 613 included in the additional request approval. Here, the secondary node 3D may obtain the number of times of blind decoding $B_{actual}$ in the set of the second PDCCH candidates in the unit time or in one slot in NR, based on the UE capability information 603A and/or RRCConnectionReconfiguration message 605 (the parameter NR-pdcch-Candidate, the parameter NR-dci-Format, etc.). Here, based on $B_{actual}$ obtained and a part or all of (iii) and (iv) described above, the secondary node 3D may set the parameter LTE-pdcch-Candidate and/or the parameter LTE-dci-Format such that the number of times of blind decoding $A_{actual}$ in the set of the first PDCCH candidates in the unit time or in one subframe in EUTRA does not exceed $A_{MAX\_act}$. $A_{MAX\_act}$ may be given, based at least on $A_{MAX}$, $B_{actual}$, and X. $A_{MAx\_act}$ may be given by any one of Equations (12) to (14) below.

Equation 12

$$A_{MAX\_act} = A_{MAX} - \text{floor}(B_{actual}/X)$$

Equation 13

$$A_{MAX\_act} = \text{floor}(A_{MAX} - B_{actual}/X)$$

Equation 14

$$A_{MAX\_act} = \text{floor}\{(B_{MAX} - B_{actual})/X\}$$

Hereinafter, various aspects of the terminal apparatus 1 and the base station apparatus 3 according to the present embodiment will be described.
(1) A first aspect of the present embodiment is a terminal apparatus 1 including a receiver configured to monitor a set of first PDCCH candidates in one subframe in EUTRA and a set of second PDCCH candidates in one slot in NR, and a transmitter configured to transmit UE capability information, the UE capability information indicating at least a maximum number A of times of blind decoding in the set of the first PDCCH candidates and a maximum number B of times of blind decoding in the set of the second PDCCH candidates, the maximum numbers A and B being supported by the terminal apparatus.

(2) A second aspect of the present embodiment is a base station apparatus 3 connected to another base station apparatus transmitting a second PDCCH in a set of second PDCCH candidates in one slot in NR, the base station apparatus including a transmitter configured to transmit, to a terminal apparatus, a first PDCCH in a set of first PDCCH candidates in one subframe in EUTRA, and a receiver configured to receive UE capability information from the terminal apparatus, the UE capability information indicating at least a maximum number A of times of blind decoding in the set of the first PDCCH candidates and a maximum number B of times of blind decoding in the set of the second PDCCH candidates, the maximum numbers A and B being supported by the terminal apparatus.

(3) A third aspect of the present embodiment is a base station apparatus 3 including a transmitter configured to transmit, to a terminal apparatus, a first PDCCH in a set of first PDCCH candidates in one subframe in EUTRA and to transmit, to the terminal apparatus, a second PDCCH in a set of second PDCCH candidates in one slot in NR, and a receiver configured to receive UE capability information from the terminal apparatus, the UE capability information indicating at least a maximum number A of times of blind decoding in the set of the first PDCCH candidates and a maximum number B of times of blind decoding in the set of the second PDCCH candidates, the maximum numbers A and B being supported by the terminal apparatus.

Thus, information is efficiently transmitted between the terminal apparatus 1 and the base station apparatus 3.

The base station apparatus 3 according to the present embodiment can also be realized as an aggregation (an apparatus group) including multiple apparatuses (e.g., the master node 3C and the secondary node 3D). Each of the apparatuses constituting such an apparatus group may include some or all portions of each function or each functional block of the base station apparatus 3 according to the above-described embodiment. The apparatus group is required to have each general function or each functional block of the base station apparatus 3. Furthermore, the terminal apparatus 1 according to the above-described embodiment can also communicate with the base station apparatus as the aggregation.

Furthermore, the base station apparatus 3 according to the above-described embodiment may serve as an Evolved Universal Terrestrial Radio Access Network (EUTRAN). Furthermore, the base station apparatus 3 according to the above-described embodiment may have some or all portions of the functions of a node higher than an eNodeB.

A program running on an apparatus according to an aspect of the present invention may serve as a program that controls a Central Processing Unit (CPU) and the like to cause a computer to operate in such a manner as to realize the functions of the above-described embodiments according to the present invention. Programs or the information handled by the programs are temporarily read into a volatile memory, such as a Random Access Memory (RAM) while being processed, or stored in a non-volatile memory, such as a flash memory, or a Hard Disk Drive (HDD), and then read by the CPU to be modified or rewritten, as necessary.

Note that the apparatuses in the above-described embodiment may be partially enabled by a computer. In such a case, a program for realizing such control functions may be recorded on a computer-readable recording medium to cause a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically retains a program for a short period of time, such as a communication line that is used to transmit the program over a network such as the Internet or over a communication line such as a telephone line, and may also include a medium that retains a program for a fixed period of time, such as a volatile memory within the computer system for functioning as a server or a client in such a case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiments may be implemented or performed on an electric circuit, that is, typically an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor, or the processor may be a processor of known type, a controller, a micro-controller, or a state machine instead. The general-purpose processor or the above-mentioned circuits may be constituted of a digital circuit, or may be constituted of an analog circuit. Furthermore, in a case that with advances in semiconductor technology, a circuit integration technology appears that replaces the present integrated circuits, it is also possible to use an integrated circuit based on the technology.

Note that the invention of the present patent application is not limited to the above-described embodiments. In the embodiment, apparatuses have been described as an example, but the invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Furthermore, various modifications are possible within the scope of one aspect of the present invention defined by claims, and embodiments that are made by suitably combining technical means disclosed according to the different embodiments are also included in the technical scope of the present invention. Furthermore, a configuration in which constituent elements, described in the respective embodiments and having mutually the same effects, are substituted for one another is also included in the technical scope of the present invention.

Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

Reference Signs List

| 1 (1A, 1B, 1C) | Terminal apparatus |
|---|---|
| 3 | Base station apparatus |
| 101 | Higher layer processing unit |
| 103 | Controller |
| 105 | Receiver |
| 107 | Transmitter |
| 301 | Higher layer processing unit |
| 303 | Controller |
| 305 | Receiver |
| 307 | Transmitter |
| 1011 | Radio resource control unit |
| 1013 | Scheduling unit |
| 1015 | Transmit power control unit |
| 3011 | Radio resource control unit |
| 3013 | Scheduling unit |
| 3015 | Transmit power control unit |

**Claims**

1.   A terminal apparatus comprising:

a receiver configured to monitor a set of first PDCCH candidates in one subframe in EUTRA and a set of second PDCCH candidates in one slot in NR; and
a transmitter configured to transmit UE capability information, wherein
the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

2.   A base station apparatus connected to another base station apparatus transmitting a second PDCCH in a set of second PDCCH candidates in one slot in NR, the base station apparatus comprising:

a transmitter configured to transmit, to a terminal apparatus, a first PDCCH in a set of first PDCCH candidates in one subframe in EUTRA, and
a receiver configured to receive UE capability information from the terminal apparatus, wherein
the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

3.   A base station apparatus comprising:

a transmitter configured to transmit, to a terminal apparatus, a first PDCCH in a set of first PDCCH candidates in one subframe in EUTRA and to transmit, to the terminal apparatus, a second PDCCH in a set of second PDCCH candidates in one slot in NR; and

a receiver configured to receive UE capability information from the terminal apparatus, wherein the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

4. A communication method for a terminal apparatus, the communication method comprising:

monitoring a set of first PDCCH candidates in one subframe in EUTRA and a set of second PDCCH candidates in one slot in NR, and
transmitting UE capability information, wherein
the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

5. A communication method for a base station apparatus connected to another base station apparatus transmitting a second PDCCH in a set of second PDCCH candidates in one slot in NR, the communication method comprising:

transmitting, to a terminal apparatus, a first PDCCH in a set of first PDCCH candidates in one subframe in EUTRA; and
receiving UE capability information from the terminal apparatus, wherein
the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

6. A communication method for a base station apparatus, the communication method comprising:

transmitting, to a terminal apparatus, a first PDCCH in a set of first PDCCH candidates in one subframe in EUTRA and transmitting, to the terminal apparatus, a second PDCCH in a set of second PDCCH candidates in one slot in NR; and
receiving UE capability information from the terminal apparatus, wherein
the UE capability information indicates at least a maximum number A of times of blind decoding in the set of the first PDCCH candidates and a maximum number B of times of blind decoding in the set of the second PDCCH candidates, the maximum numbers A and B being supported by the terminal apparatus.

NETWORK 3A

CORE NETWORK APPARATUS 3B

2 D

MASTER NODE 3C

2 C

SECONDARY NODE 3D

2 A

2 B

1

TERMINAL APPARATUS 1

# FIG. 1

TIME →

RADIO FRAME
10 ms

SUBFRAME
1 ms

SLOT
0.5ms

| SLOT #0 | SLOT #1 | SLOT #2 | SLOT #3 | SLOT #4 | SLOT #5 | SLOT #6 | SLOT #7 | SLOT #8 | SLOT #9 |

$n_s=0$         $n_s=19$

# FIG. 2

EP 3 681 222 A1

SLOT

$k = N_{sc} - 1$

CELL BANDWIDTH

RESOURCE ELEMENT $a_{k,\,l}$

$k = 0$

$l = 0$  $l = N_{symb} - 1$

FREQUENCY
(SUBCARRIER INDEX $k$)

TIME (SYMBOL INDEX $l$)

# FIG. 3

FIG. 4

FIG. 5

TERMINAL APPARATUS 1      MASTER NODE 3C      SECONDARY NODE 3D

CONNECTION ESTABLISHMENT
PROCEDURE 601    ~ 600

UE CAPABILITY INFORMATION 603A,
MEASUREMENT RESULT 603B    ~ 602

RRCConnection
Reconfiguration 605    ~ 604

RRCConnection
ReconfigurationComplete 607    ~ 606

ADDITIONAL REQUEST 609    ~ 608

ADDITIONAL REQUEST
APPROVAL 611    ~ 610

RRCConnection
Reconfiguration 613    ~ 612

RRCConnection
ReconfigurationComplete 615    ~ 614

RECONFIGURATION COMPLETE 617    ~ 616

RANDOM ACCESS PROCEDURE 619    ~ 618

# FIG. 6

FIG. 7

## INTERNATIONAL SEARCH REPORT

| International application No. |
| --- |
| PCT/JP2018/033023 |

| A. CLASSIFICATION OF SUBJECT MATTER |
| --- |
| Int.Cl. H04W72/04(2009.01)i, H04W8/22(2009.01)i, H04W16/32(2009.01)i |

According to International Patent Classification (IPC) or to both national classification and IPC

| B. FIELDS SEARCHED |
| --- |
| Minimum documentation searched (classification system followed by classification symbols)<br>Int.Cl. H04W72/04, H04W8/22, H04W16/32 |

| Documentation searched other than minimum documentation to the extent that such documents are included in the fields searched | |
| --- | --- |
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | WO 2016/114560 A1 (LG ELECTRONICS INC.) 21 July 2016, paragraphs [0316], [0417], [0010], [0016] & JP 2018-506246 A, paragraphs [0273], [0427], fig. 10, 16 & US 2017/0374569 A1, paragraphs [0273], [0427], fig. 10, 16 & EP 3247060 A1 | 1-6 |
| Y | NTT DOCOMO, INC., PDCCH for URLLC low latency [online], 3GPP TSG RAN WG1 #88b R1-1705738, 03 April 2017, Clause 2.2 Proposal 3 | 1-6 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 November 2018 (14.11.2018) | 27 November 2018 (27.11.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

REFERENCES CITED IN THE DESCRIPTION

**Patent documents cited in the description**

- JP 2017170972 A

**Non-patent literature cited in the description**

- *3GPP TS 36.211 V14.3.0 (2017-06),* 23 June 2017
- *3GPP TS 36.212 V14.3.0 (2017-06),* 23 June 2017
- *3GPP TS 36.213 V14.3.0 (2017-06),* 23 June 2017
- *3GPP TS 38.212 V0.1.1 (2017-07)'',* R1-1712011, 14 July 2017
- *3GPP TS 38.212 V0.0.1 (2017-07)'',* R1-1712014, 14 July 2017
- *3GPP TS 38.213 V0.0.1 (2017-07)'',* R1-1712015, 15 July 2017
- *3GPP TS 38.214 V0.0.1 (2017-07)'',* R1-1712016, 14 July 2017
- *3GPP TS 37.340 V0.2.0 (2017-06),* 05 June 2017